# EUROPÄISCHE PATENTSCHRIFT

(11) **EP 4 076 797 B1**
(45) Veröffentlichungstag und Bekanntmachung des Hinweises auf die Patenterteilung: **07.02.2024**
(21) Anmeldenummer: 20821194.6
(22) Anmeldetag: 08.12.2020
(51) Int. Cl.: B22F 12/53, B22F 3/115, B22F 10/22, B33Y 30/00

(54) **DRUCKKOPF FÜR DEN 3D-DRUCK VON METALLEN**
PRINT HEAD FOR 3D PRINTING OF METALS
TÊTE D'IMPRESSION POUR IMPRESSION 3D DE MÉTAUX

(30) Priorität: 17.12.2019 DE 102019219844
(43) Veröffentlichungstag der Anmeldung: 26.10.2022
(73) Patentinhaber: Robert Bosch GmbH, 70442 Stuttgart (DE)
(72) Erfinder: MAIER, Eberhard, 73257 Koengen (DE)
(86) Internationale Anmeldenummer: PCT/EP2020/085067
(87) Internationale Veröffentlichungsnummer: WO 2021/122153

(56) Entgegenhaltungen:
- CN-A- 103 785 834
- DE-A1-102016 224 047

## Beschreibung

Die Erfindung betrifft einen Druckkopf für einen 3D-Drucker, der zum Drucken von Metallen geeignet ist.

### Stand der Technik

Ein 3D-Drucker für ein thermoplastisches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in den das Ausgangsmaterial geschmolzen wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material deponiert werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Gegenüber thermoplastischen Kunststoffen haben Metalle einen wesentlich höheren Schmelzpunkt und zugleich im flüssigen Zustand eine wesentlich geringere Viskosität.

3D-Metalldrucker, insbesondere Drop-on-Demand-Drucker, wie beispielsweise in der Offenlegungsschrift DE 10 2016 224 047 A1 offenbart, sind für Industrieanwendungen interessant, müssen jedoch unter anderem folgenden Anforderungen gerecht werden:
- Gewährleistung eines dauerhaften Betriebs,
- Reproduzierbarkeit der Tropfen, bzw. des Aufbaus des Bauteils,
- Energieeffizienz bezüglich der Erschmelzung und der Bauteilerstellung,
- Einhalten von geringen Nebenzeiten z.B. zur Inbetriebnahme und beim Abschalten und
- Austausch von Verschleißteilen.

Das flüssige Metall wird vielfach in einem keramischen, oder Keramik ähnlichen Tiegel, bzw. einem Reservoir erschmolzen. Ein Problem entsteht nun durch die Relativbewegung zwischen Tiegel und des oberen Teils des metallischen Druckkopfs.

Darüber hinaus wird für die Adaptierung des Aktors die Verwendung der Materialien eingeschränkt, da schlecht wärmeleitende Materialien zu bevorzugen sind um den Wärmetransport zu hemmen. Die Aktoren haben in den meisten Fällen einen Temperaturarbeitsbereich <150°C, der nicht überschritten werden sollte

Das Dokument CN 103 785 834 A offenbart einen Druckkopf für einen 3D-Drucker, umfassend ein Gehäuse, eine Vorrichtung zur Zuführung eines druckbaren Materials, einen Kolben, ein Reservoir mit einer Austrittsöffnung und eine Aktorvorrichtung zur Verschiebung des Kolbens, wobei das Gehäuse mehrteilig ausgebildet ist und das Reservoir zentriert im Druckkopf angeordnet ist.

### Offenbarung der Erfindung

Die Aufgabe wird durch den erfindungsgemäßen Druckkopf mit den Merkmalen des Anspruchs 1 erfüllt.

Der erfindungsgemäße Druckkopf für einen 3D-Drucker, insbesondere Metalldrucker, umfasst ein Gehäuse, eine Vorrichtung zur Zuführung eines Metalls, einen Kolben, ein Reservoir mit einer Austrittsöffnung und eine Aktorvorrichtung zur Verschiebung des Kolbens, wobei das Reservoir einen Schmelzbereich und einen Verdrängerraum für eine flüssige Phase des Metalls aufweist, wobei der Schmelzbereich an einer inerten Atmosphäre angrenzt und mit dem Verdrängerraum derart verbunden ist, dass durch die Verschiebung des Kolbens die flüssige Phase des Metalls zum Durchtritt durch die Austrittsöffnung anregbar ist. Ferner ist das Gehäuse mehrteilig ausgebildet, wobei es zumindest einen Kühlflansch, eine Isolierplatte und das Reservoir umfasst.

Das Reservoir ist durch eine Zentriervorrichtung mit dem Kühlflansch und/oder der Isolierplatte verbunden.

Erfindungsgemäß weist die Zentriervorrichtung zumindest einen Flansch, eine Spannvorrichtung und eine Zentrierhülse auf, wobei das Reservoir über eine Wirkfläche mit dem Flansch derart verbunden ist, dass sich das Reservoir konzentrisch zum Kühlflansch und/oder der Isolierplatte ausrichtet, wobei der Flansch über die Spannvorrichtung mit dem Kühlflansch und/oder der Isolierplatte verbunden ist und die Zentrierhülse derart im Kühlflansch und/oder der Isolierplatte angeordnet ist, dass der Kolben zentrisch zum Reservoir ausgerichtet ist.

In einer Weiterbildung ist die Spannvorrichtung aus Spannschrauben gebildet, die über Tellerfedern am Kühlflansch abgestützt sind.

Da das flüssige Metall vielfach in einem keramischen, oder Keramik ähnlichen Tiegel, bzw. dem Reservoir erschmolzen wird, entsteht eine Relativbewegung zwischen Tiegel und dem oberen metallischen Druckkopf. Die Erfindung sorgt in vorteilhafter Weise dafür, dass eine Relativbewegung der Materialien mit unterschiedlichen Wärmeausdehnungen zugelassen wird, diese aber trotzdem zentrisch zueinander positioniert bleiben.

Aufgrund der großen Relativbewegung zwischen Tiegel und metallischer Einfassung und der Kontaktfläche zum oberen Teil des Druckkopfes muss ein Ausdehnungsbereich axial und radial ermöglicht werden, was durch die Erfindung in vorteilhafter Weise erreicht wird. Falls nur ein radialer Spalt vorgehalten werden sollte, wird der Tiegel nicht zentriert. Es besteht dann die Gefahr, dass dieser durch die mehrfache Relativbewegung aufgrund des mehrfachen Durchlaufens des Temperaturgangs exzentrisch am Erhitzer, bzw. Induktor anliegt. Damit würde sich die Düse um ein solches Maß verschieben, wodurch sich die Kolbenführung exzentrisch zum Kolben ausrichten würde, bzw. die zwei Bauteile würden nicht mehr miteinander in Flucht liegen. Da dies für eine reproduzierbare Aktuierung und eine gleichmäßige Tröpfchenerzeugung kontraproduktiv ist, sorgt die Erfindung, insbesondere die Zentriervorrichtung, in vorteilhafter Weise für eine konzentrische Ausrichtung und eine elastische Vorspannung.

Ferner sorgt die Erfindung in vorteilhafter Weise dafür, dass eine über den ganzen Temperaturgang wirksame "reversible" Zentrierung ermöglicht wird. Zudem werden in vorteilhafter Weise Spannungen im keramischen Tiegel, bzw. Reservoir, die auf Grund einer Behinderung der Thermischen Ausdehnung entstehen können, vermieden. Toleranzen der Fertigung werden weitgehend kompensiert und dadurch die konzentrische Position des Kolbens in der Kolbenführung sichergestellt.

In vorteilhafter Weise wird dadurch eine reproduzierbare Aktuierung, bzw. ein reproduzierbarer Druckstoß durch den Kolben im Druckkopf erreicht.

Der Schmelzbereich grenzt in vorteilhafter Weise an eine inerte Atmosphäre an. Dadurch wird sichergestellt, dass der Druck auf der Schmelze nahezu konstant ist, so dass dieser keine Auswirkung auf die Druckqualität hat. Ferner sorgt die inerte Atmosphäre dafür, dass keine ungewünschte chemische Reaktion im Reservoir stattfindet. Beispielsweise kann die inerte Atmosphäre aus Stickstoff oder einem anderen Inertgas gebildet sein.

Das Reservoir weist in vorteilhafter Weise den Schmelzbereich zum Schmelzen des Metalls, wobei dieser an der inerten Atmosphäre angrenzt und zusätzlich den Verdrängerraum auf. Dadurch ist es möglich den Schmelzvorgang räumlich von dem Verdränger-, bzw. Druckvorgang zu trennen, wodurch die Reproduzierbarkeit der Tropfen, bzw. eines Bauteils verbessert wird. Dabei ist in vorteilhafter Weise die im Verdrängerraum vorhandene flüssige Phase des Metalls durch die Verschiebung des Kolbens zum Durchtritt durch die Austrittsöffnung anregbar. Der Kolben liegt dabei vorteilhaft direkt auf der Schmelze auf, wodurch die Genauigkeit des Druckens weiter zunimmt, da die Schmelze nahezu inkompressibel ist. Die Schmelze, bzw. flüssige Phase des Metalls gelangt entweder über Schweredruck oder über eine Kombination des Schweredrucks und des Atmosphärendrucks des Inertgases vom Schmelzbereich in den Verdrängerraum. Die Austrittsöffnung entspricht einer Düse und ist je nach Aufbau des Reservoirs austauschbar.

Das Gehäuse ist in vorteilhafter Weise mehrteilig ausgebildet, wodurch ein geeignetes Temperaturmanagement und durch den Einsatz von verschiedenen Materialien ein dauerhafter Betrieb gewährleistet ist. Durch die mehrteilige Ausführung ist zudem ein modularer Aufbau gegeben, der einen bedarfsgerechten Austausch der Komponenten erlaubt. Zusätzlich ist der Druckkopf durch das mehrteilige Gehäuse derart ausgeführt, dass die unterschiedlichen Funktionen auch durch unterschiedliche Bauteile ausgeführt sind.

Weitere, die Erfindung verbessernde Maßnahmen werden nachstehend gemeinsam mit der Beschreibung des bevorzugten Ausführungsbeispiels der Erfindung anhand der Figuren näher dargestellt.

### Kurze Beschreibung der Zeichnung

Es zeigen:
- Fig. 1: Ein Beispiel eines Druckkopfes nach Stand der Technik und
- Fig. 2: ein Ausschnitt eines erfindungsgemäßen Druckkopfes.

### Ausführungsbeispiele

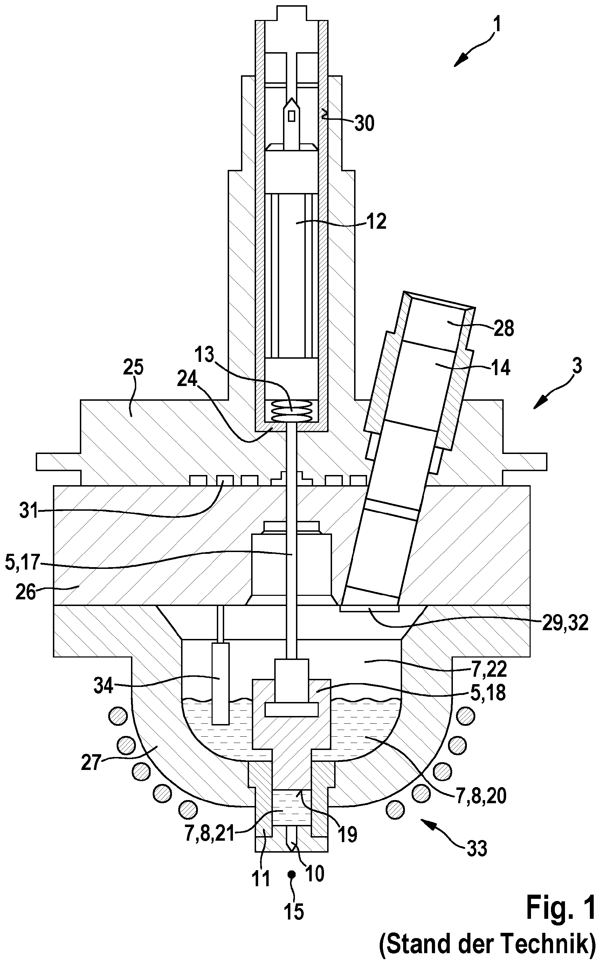

Fig. 1 zeigt ein Beispiel eines bekannten Druckkopfes 1 für einen 3D-Drucker, insbesondere Metalldrucker.

Der Druckkopf 1 umfasst ein Gehäuse 3, eine Vorrichtung 28 zur Zuführung eines Metalls 14 in fester Phase, einen Kolben 5, ein Reservoir 7, 27 mit einer Austrittsöffnung 10 und eine Aktorvorrichtung 12 zur Verschiebung des Kolbens. Das Reservoir 7, 27 weist einen Schmelzbereich 20 und einen Verdrängerraum 21 für eine flüssige Phase 8 des Metalls 14 auf, wobei der Schmelzbereich 20 an einer inerten Atmosphäre 22 angrenzt und mit dem Verdrängerraum 21 derart verbunden ist, dass durch die Verschiebung des Kolbens 5 die flüssige Phase 8 des Metalls 14 zum Durchtritt durch die Austrittsöffnung 10 anregbar ist. Die flüssige Phase 8 des Metalls 14 wird auch als Schmelze 8 bezeichnet und die inerte Atmosphäre 22 ist durch Einleitung eines Inertgases 22 in das Reservoir 7, 27 gebildet. Die Einleitung des Inertgases 22 findet bevorzugt über einen kalten Bereich des Druckkopfes 1 in das Reservoir 7, 27 statt.

Das Gehäuse 3 ist mehrteilig ausgebildet, wobei es zumindest einen Kühlflansch 25, eine Isolierplatte 26 und das Reservoir 7, 27 umfasst.

Der Kolben 5 ist mehrteilig ausgebildet, wobei er zumindest eine Kolbenstange 17 aus einem metallischen Werkstoff und einen Stempel 18 aus Keramik umfasst. Die Kolbenstange 17 ragt ausgehend von der Aktorvorrichtung 12 durch den Kühlflansch 25 und der Isolierplatte 26 bis in das Reservoir 7, 27 hinein, wo sie in den Stempel 18 übergeht.

Der Kühlflansch 25 weist eine Ausnehmung 30 zur Aufnahme der Aktorvorrichtung 12, die als piezoelektrischer Aktor 12 ausgebildet ist, auf. Der piezoelektrische Aktor 12 ist während des Betriebs in der Ausnehmung 30 derart fixiert, dass er bei Anliegen einer Spannung einen Arbeitshub auf den Kolben 5, speziell auf die Kolbenstange 17 des Kolbens, ausübt. Die Kolbenstange 17 überträgt den Arbeitshub auf den Stempel 18, so dass dieser die flüssige Phase 8 des Metalls 14 zum Durchtritt durch die Austrittsöffnung 10 anregt. Der Kolben 5 ist ohne Aktuierung des Aktors 12 durch eine Feder 13 in eine Ausgangsstellung rückstellbar, wobei die Feder 13 in der Ausnehmung 30 des Kühlflanschs 25 zwischen einem Absatz 24 und dem Aktor 12 angeordnet ist. Die Feder 13 ist als Tellerfeder ausgebildet.

Ferner weist der Kühlflansch 25 Kühlkanäle 31 zur Kühlung auf. Die Kühlkanäle 31 sind zwischen dem Kühlflansch 25 und der Isolierplatte 26 angeordnet und werden mit einem Kühlmedium durchspült. Dies dient als Kühlung gegenüber der Erwärmung durch die Schmelze 8 und zum Kühlen des Aktors 12 im Betrieb. Der Kühlflansch 25 ist aus einem metallischen Werkstoff gebildet.

Die an dem Kühlflansch 25 auf Seiten der Kühlkanäle 31 anliegende Isolierplatte 26 ist aus einem wärmeisolierenden Material gebildet und derart ausgebildet, dass sie einen Wärmeübergang vom Reservoir 7, 27 zum Kühlflansch 25 vermindert.

Die Vorrichtung 28 zur Zuführung des Metalls 14 mündet in das Reservoir 7, 27 und ist in dem Kühlflansch 25 und der Isolierplatte 26 angeordnet. Die Vorrichtung 28 ragt durch den Kühlflansch 25 und der Isolierplatte 26 hindurch und das Metall 14, bzw. das zu druckende Material 14 ist von außen durch die Vorrichtung 28 zuführbar. Bevorzugt können vordosierte Materialstücke, bzw. Pellets verwendet werden. Am Übergang der Isolierplatte 26 zum Reservoir 7, 27 befindet sich eine Öffnung 29 durch die das Material 14 in das Reservoir 7, 27 gelangt. Die Öffnung 29 ist durch eine Vorrichtung 32 verschließbar, so dass diese bevorzugt nur bei Zuführung des Materials 14 geöffnet ist, wodurch die Strahlungsenergie vom Reservoir 7, 27 auf die Vorrichtung 28 zur Zuführung des Metalls 14 reduziert wird.

Das Reservoir 7, 27 ist als Schmelztiegel 27 ausgebildet, wobei außerhalb des Schmelztiegels 27 ein Induktor 33 und innerhalb des Schmelztiegels ein Sensor 34, insbesondere ein Temperatursensor, angeordnet sind. Zwischen dem Schmelztiegel 27 und dem Induktor 33, bzw. der Induktor Spule 33 kann sich optional noch ein nicht dargestellter Isolator befinden.

Das Metall 14 gelangt in einer festen Phase 14 in den Schmelzbereich 20 des Schmelztiegels und wird durch den Induktor 33 erhitzt, bis es in eine flüssige Phase 8 übergeht. Bei Erreichen einer gewünschten Prozesstemperatur der Schmelze 8, die durch den Temperatursensor 34 ermittelt wird, kann der Druckkopf 1 den Betrieb aufnehmen. Die flüssige Phase 8, bzw. die Schmelze 8 gelangt durch Schweredruck der Schmelze 8 oder durch eine Kombination aus Schweredruck und Atmosphärendruck des Inertgases 22 am Stempel 18 vorbei in den Verdrängerraum 21. Der Stempel 18 des Kolbens 5 ist mit einer Druckseite 19 in der Schmelze 8, bzw. von Schmelze 8 umgeben und an der Verbindungsseite zur Kolbenstange 17 in der inerten Atmosphäre 22, bzw. von der inerten Atmosphäre 22 umgeben. Die Kolbenstange 17 kommt prozessbedingt nicht mit der Schmelze 8 in Berührung.

Die Keramik des Stempels 18 ist vorteilhafterweise sehr gut temperaturleitend, um die durch den Induktor 33 erzeugte Wärme gut in den Verdrängerraum 21 übertragen zu können.

Bei Aktuierung des piezoelektrischen Aktors 12 übt die Druckseite 19 des Stempels 18 einen Druck auf die Schmelze 8 im Verdrängerraum 21 in Richtung der Austrittsöffnung 10 aus und sorgt für einen Ausstoß eines Tropfens 15 durch die Austrittsöffnung 10 des Reservoirs 7, 27, bzw. des Verdrängerraums 21. Die Austrittsöffnung 10 ist für den Ausstoß von Tropfen 15 der flüssigen Phase 8 des Metalls 14 ausgebildet, wobei die Austrittsöffnung 10 die Form einer Düse 10 aufweist und fest mit dem Schmelztiegel 27 verbunden sein kann, oder wie in dem Ausführungsbeispiel gezeigt, einen wechselbaren Einsatz 11 aufweist, der den Einsatz von unterschiedlichen Düsengeometrien erlaubt. Dieser wechselbare Einsatz 11 wird auch als Hülse 11, bzw. Führungshülse 11 des Kolbens bezeichnet.

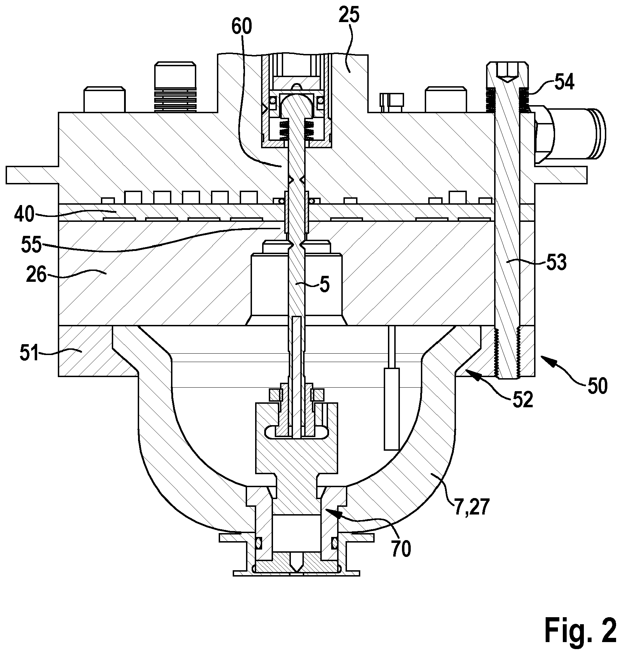

Fig. 2 zeigt ein Ausschnitt eines erfindungsgemäßen Druckkopfes, wobei das Reservoir 7, 27 durch eine Zentriervorrichtung 50 mit dem Kühlflansch 25 und/oder der Isolierplatte 26 verbunden ist. Die Zentriervorrichtung 50 weist zumindest einen Flansch 51, eine Spannvorrichtung 53 und eine Zentrierhülse 55 auf. Das Reservoir 7, 27 ist über eine Wirkfläche 52 mit dem Flansch 51 derart verbunden, dass sich das Reservoir 7, 27 konzentrisch zum Kühlflansch 25 und/oder der Isolierplatte 26 ausrichtet. Der Flansch 51 ist über die Spannvorrichtung 53 mit dem Kühlflansch 25 und/oder der Isolierplatte 26 verbunden. Die Spannvorrichtung 53 ist aus Spannschrauben 53 gebildet, die über Tellerfedern 54 am Kühlflansch 25 abgestützt sind. Die Zentrierhülse 55 ist derart im Kühlflansch 25 und/oder der Isolierplatte 26 angeordnet, dass der Kolben 5 zentrisch zum Reservoir 7, 27 ausgerichtet ist.

Zwischen dem Kühlflansch 25 und der Isolierplatte 26 ist eine Kühlplatte 40 angeordnet. Der Kühlflansch 25 weist im Bereich 60 eine initiale Führung des Kolbens im Kühlflansch 25 auf. Ferner wird der Kolben 5 über eine weitere Kolbenführung 70 konzentrisch positioniert.

Basis der Ausrichtung, bzw. der Positionierung des Druckkopfes 1 ist der Kühlflansch 25. In diesem ist die Zentrierhülse 55 eingelassen, welche eine Positionierung zum Isolator 26 sicherstellt. Allerdings kann diese Zentrierhülse 55 keine zirkulare Ausrichtung sicherstellen. Diese Ausrichtung wird durch die Spannschrauben 53 realisiert, wobei in diesem Ausführungsbeispiel drei auf 120° verteilte Spannschrauben 53 realisiert sind.

Da der keramisch thermische Ausdehnungskoeffizient deutlich kleiner ist als der von Metall, sind die Schrauben 53 axial mittels Federn 54, beispielsweise Tellerfedern 54 vorgespannt. Damit ist sichergestellt, dass die axiale Vorspannung nicht spielbehaftet, oder andererseits auch nicht zu stark vorgespannt wird und die spröde Keramik des Reservoirs 7, 27, bzw. Tiegels 7, 27 zerstört wird. Der Flansch 51 ist über die konisch ausgebildete Wirkfläche 52 mit dem Reservoir 7, 27 verbunden. Der Konus sorgt für eine Zentrierung der Bauteile.

Dehnt sich nun der bewegliche Flansch 51 bei Erwärmung stärker aus (der Durchmesser wird um ca. 0,1 mm größer) als der Tiegel 7, 27, rutscht der Flansch 51 relativ zum sich weniger ausdehnenden Tiegel 7, 27 nach oben. Gleichzeitig wird dieser aber weiterhin an die Isolatorplatte 26, bzw. den Isolator 7, 27 angepresst. Bei Abkühlung passiert genau das Gegenteil. In jedem Fall bleibt die Position durch die Zentrierhülse 55 und die Zirkulare Ausrichtung durch die Spannschrauben 53 sichergestellt.

Der axiale Ausdehnungsunterschied inklusive der Fertigungstoleranzen werden in gleicher Weise korrigiert, und zwar zwischen der Spannschaube 53 und dem keramischen Isolator 26.

## Patentansprüche

1. Druckkopf (1) für einen 3D-Drucker, insbesondere Metalldrucker, umfassend ein Gehäuse (3), eine Vorrichtung (28) zur Zuführung eines Metalls (14), einen Kolben (5), ein Reservoir (7, 27) mit einer Austrittsöffnung (10) und eine Aktorvorrichtung (12) zur Verschiebung des Kolbens (5), wobei das Reservoir (7, 27) einen Schmelzbereich (20) und einen Verdrängerraum (21) für eine flüssige Phase (8) des Metalls (14) aufweist, wobei der Schmelzbereich (20) an einer inerten Atmosphäre (22) angrenzt und mit dem Verdrängerraum (21) derart verbunden ist, dass durch die Verschiebung des Kolbens (5) die flüssige Phase (8) des Metalls (14) zum Durchtritt durch die Austrittsöffnung (10) anregbar ist, wobei das Gehäuse (3) mehrteilig ausgebildet ist und es zumindest einen Kühlflansch (25), eine Isolierplatte (26) und das Reservoir (7, 27) umfasst,
wobei das Reservoir (7, 27) durch eine Zentriervorrichtung (50) mit dem Kühlflansch (25) und/oder der Isolierplatte (26) verbunden ist,
**dadurch gekennzeichnet, dass**
die Zentriervorrichtung (50) zumindest einen Flansch (51), eine Spannvorrichtung (53) und eine Zentrierhülse (55) aufweist, wobei
das Reservoir (7, 27) über eine Wirkfläche (52) mit dem Flansch (51) derart verbunden ist, dass sich das Reservoir (7, 27) konzentrisch zum Kühlflansch (25) und/oder der Isolierplatte (26) ausrichtet, wobei
der Flansch (51) über die Spannvorrichtung (53) mit dem Kühlflansch (25) und/oder der Isolierplatte (26) verbunden ist, wobei
die Zentrierhülse (55) derart im Kühlflansch (25) und/oder der Isolierplatte (26) angeordnet ist, dass der Kolben (5) zentrisch zum Reservoir (7, 27) ausgerichtet ist.

2. Druckkopf (1) nach Anspruch 1,
**dadurch gekennzeichnet, dass**
die Spannvorrichtung (53) aus Spannschrauben (53) gebildet ist, die über Tellerfedern (54) am Kühlflansch (25) abgestützt sind.

## Claims

1. Print head (1) for a 3D printer, in particular a metal printer, comprising a housing (3), a device (28) for supplying a metal (14), a piston (5), a reservoir (7, 27) having an outlet opening (10), and an actuator device (12) for driving the piston (5), the reservoir (7, 27) comprising a melting region (20) and a displacement space (21) for a liquid phase (8) of the metal (14), the melting region (20) being adjacent to an inert atmosphere (22) and connected to the displacement space (21) in such a way that the liquid phase (8) of the metal (14) can be made to pass through the outlet opening (10) by driving the piston (5), wherein the housing (3) is configured in a plurality of parts and it comprises at least a cooling flange (25), an insulating plate (26) and the reservoir (7, 27),
the reservoir (7, 27) being connected to the cooling flange (25) and/or the insulating plate (26) by a centering device (50),
**characterized in that**
the centering device (50) comprises at least a flange (51), a clamping device (53) and a centering sleeve (55), the reservoir (7, 27) being connected to the flange (51) via an active surface (52), in such a way that the reservoir (7, 27) is aligned concentrically with respect to the cooling flange (25) and/or the insulating plate (26),
the flange (51) being connected to the cooling flange (25) and/or the insulating plate (26) via the clamping device (53),
the centering sleeve (55) being arranged in the cooling flange (25) and/or the insulating plate (26) in such a way that the piston (5) is aligned centrally with respect to the reservoir (7, 27).

2. Print head (1) according to Claim 1,
**characterized in that**
the clamping device (53) is formed by clamping screws (53) which are braced on the cooling flange (25) by means of disk springs (54).

## Revendications

1. Tête d'impression (1) destinée à une imprimante 3D, notamment une imprimante à métal, ladite tête d'impression comprenant un boîtier (3), un dispositif (28) destiné à amener un métal (14), un piston (5), un réservoir (7, 27) pourvu d'une ouverture de sortie (10) et un dispositif d'actionnement (12) destiné à déplacer le piston (5), le réservoir (7, 27) comportant une zone de fusion (20) et un espace de déplacement (21) destiné à une phase liquide (8) du métal (14), la zone de fusion (20) étant adjacente à une atmosphère inerte (22) et étant reliée à l'espace de déplacement (21) de manière que le coulissement du piston (5) stimule la phase liquide (8) du métal (14) afin de passer à travers l'ouverture de sortie (10), le boîtier (3) étant conçu en plusieurs parties et comprenant au moins une bride de refroidissement (25), une plaque isolante (26) et le réservoir (7, 27),
le réservoir (7, 27) étant relié à la bride de refroidissement (25) et/ou à la plaque isolante (26) par un dispositif de centrage (50),
**caractérisée en ce que**
le dispositif de centrage (50) comporte au moins une bride (51), un dispositif de serrage (53) et une douille de centrage (55),
le réservoir (7, 27) étant relié à la bride (51) par le biais d'une surface active (52) de manière que le réservoir (7, 27) soit orienté concentriquement à la bride de refroidissement (25) et/ou à la plaque isolante (26),
la bride (51) étant reliée à la bride de refroidissement (25) et/ou à la plaque isolante (26) par le biais du dispositif de serrage (53),
la douille de centrage (55) étant disposée dans la bride de refroidissement (25) et/ou la plaque isolante (26) de manière que le piston (5) soit orienté au centre par rapport au réservoir (7, 27).

2. Tête d'impression (1) selon la revendication 1, **caractérisée en ce que**
le dispositif de serrage (53) est formé de vis de serrage (53) qui s'appuient sur la bride de refroidissement (25) par le biais de rondelles ressorts (54) .
